# EUROPÄISCHE PATENTSCHRIFT

(11) **EP 1 509 416 B1**
(45) Veröffentlichungstag und Bekanntmachung des Hinweises auf die Patenterteilung: **15.03.2006**
(21) Anmeldenummer: 03740054.6
(22) Anmeldetag: 02.06.2003
(51) Int. Cl.: B60G 21/055, F16D 1/068

(54) **GETEILTER STABILISATOR UND VERFAHREN ZUR HERSTELLUNG EINER VERZAHNTEN ANBINDUNG DES AUSSEREN DREHTEILES AN EINEN DER BEIDEN STABILISATORTEILE**
SPLIT STABILISER AND METHOD FOR PRODUCTION OF A TOOTHED CONNECTION FOR THE OUTER ROTATING PIECE TO ONE OF THE BOTH STABILISER PIECES
STABILISATEUR SUBDIVISE ET PROCEDE DE REALISATION D'UNE CONNEXION PAR ENGRENEMENT DE LA PARTIE EXTERIEURE ROTATIVE A L'UNE DES DEUX PARTIES DU STABILISATEUR

(30) Priorität: 06.06.2002 DE 10225035
(43) Veröffentlichungstag der Anmeldung: 02.03.2005
(73) Patentinhaber: ZF Lemförder Metallwaren AG, 49448 Lemförde (DE)
(72) Erfinder: REICHEL, Klaus, 19374 Domsühl (DE); BAUSTIAN, Torsten, 19089 Crivitz (DE); KRÜGER, Winfried, 19089 Crivitz (DE); BEETZ, Stefan, 19089 Barnim (DE); KLASEN, Christian, 19063 Schwerin (DE); PETERS, Jochen, 19370 Parchim (DE)
(86) Internationale Anmeldenummer: PCT/DE2003/001804
(87) Internationale Veröffentlichungsnummer: WO 2003/103999

(56) Entgegenhaltungen:
- EP-A- 0 061 368
- EP-A- 0 428 439
- DE-A- 4 229 025
- DE-A- 4 337 769
- DE-B- 1 179 124
- DE-C- 3 737 735
- FR-A- 2 816 126
- US-A- 5 491 996
- US-A- 5 527 061

## Beschreibung

Die Erfindung bezieht sich auf einen geteilten Stabilisator nach dem Oberbegriff des Anspruchs 1 und einem entsprechenden Herstellungsverfahren nach dem Oberbegriff des Anspruchs 3.

Derartige Stabilisatoren werden insbesondere in der Fahrzeugtechnik eingesetzt.

Dabei ist grundsätzlich jeder Achse eines Kraftfahrzeuges ein Stabilisator zugeordnet, der nach dem Prinzip eines Drehstabes arbeitet und der parallel zur Fahrzeugachse ausgerichtet ist. Die beiden Enden des Stabilisators sind an der jeweiligen Radaufhängung befestigt. Dieser Stabilisator verhindert oder schwächt die Übertragung der von den Fahrbahnverhältnissen ausgehenden Wankbewegungen auf das Fahrzeug wesentlich ab.

Es gibt einteilige Stabilisatoren, die nur auf eine vorbestimmte Federrate ausgelegt sind und daher auf wechselnde Belastungen entweder zu weich oder zu hart reagieren. Sie sind daher für Fahrzeuge, die sowohl für die Strasse als auch für das Gelände ausgelegt sind, ungeeignet.

Fahrzeuge, die solchen Belastungen unterliegen, sind üblicherweise mit einem geteilten Stabilisator ausgerüstet. Ein solcher geteilter Stabilisator ist beispielsweise aus der DE 100 12 915 A1 bekannt, dessen beide Stabilisatorteile durch einen Aktuator in Gestalt einer schaltbaren Kupplung verbunden sind. Dieser Aktuator besteht aus einem äußeren Drehteil, der über einen Deckel mit dem einem Stabilisatorteil drehfest verbunden ist, und aus einem inneren Drehteil, der direkt mit dem anderen Stabilisatorteil drehfest verbunden ist. Dabei ist sowohl der inneren Drehteil mit dem einen Stabilisatorteil als auch der Deckel des äußeren Drehteils mit dem anderen Stabilisatorteil jeweils aus einem Stück gefertigt.

Mit dieser konstruktiven Lösung ergeben sich fertigungstechnisch komplizierte Einzelteile, weil der Stabilisatorteil eine geschwungene Form und eine große Länge besitzt. Die fertigungstechnischen Schwierigkeiten werden insbesondere beim Stabilisatorteil mit dem Deckel noch dadurch erhöht, dass das Ende des komplizierten Stabilisatorteiles zur Herstellung des Deckels durch Umformung bearbeitet werden muss.

In der DE 42 29 025 A1 wird nun ein geteilter Stabilisator beschrieben, dessen Stabilisatorteil mit dem Deckel des äußeren Drehteiles durch einen Laserstrahl verschweißt ist. Eine solche Schweißverbindung erfüllt nicht die geforderten Festigkeitsanforderungen zur Übertragung der hohen und wechselnden Drehmomente, weil der Stabilisatorteil aus einem Federstahl und der Deckel aus einem einsatzgehärteten Material bestehen und insbesondere Federstahl als nicht schweißbar gilt. Die hohen Schweißtemperaturen führen in der Abkühlphase zu Rissbildungen.

Außerdem verbietet sich das Laserstrahlschweißen aus Kostengründen, weil dazu eine spezielle Laserschweißmaschine mit komplizierten Vorrichtungen notwendig wird.

Aus der US 5,700,027 ist nun ein geteilter Stabilisator mit einem Aktuator bekannt, bei dem der Deckels des äußeren Drehteiles eine Innenverzahnung und der entsprechende Stabilisatorteil eine Außenverzahnung besitzen. Eine solche Verzahnung unterliegt aber in der Regel einem fertigungstechnischen Spiel, das sich funktionell als ein Schlupf zwischen den beiden Drehteilen darstellt. Um diesen Nachteil zu vermeiden, ist es allgemein bekannt, den Deckel mit seiner Innenverzahnung auf die Außenverzahnung des Stabilisatorteiles aufzukneten. Damit wird zwar das Spiel beseitigt, aber dafür verschlechtert sich die Tragfähigkeit dieser Verzahnung.

Eine solche Verzahnung ist auch nicht axial gesichert, sodass zusätzlich ein radialer Stift eingebracht werden muss, der einerseits die Materialstärke der drehmomentübertragenden Teile wieder schwächt und der andererseits wegen der hohen Materialgüte schwer zu bearbeiten ist und der damit die Herstellungskosten in unnötiger Weise erhöht. Ein weiterer Nachteil besteht darin, dass die Verzahnung keine Dichtheit nach außen gewährleistet. Daher machen sich zusätzliche Dichtungselemente erforderlich, die die inneren Arbeitsräume des Aktuators nach außen abdichten. Auch das verteuert den Stabilisator.

Weiterhin zeigt DE 43 37 769 den Gegenstand des Oberbegriffs des Anspruchs 1.

Der Erfindung liegt daher die Aufgabe zu Grunde, bei einem zweiteiligen Stabilisator der vorliegenden Art die Anbindung des Aktuators an den entsprechenden Stabilisatorteil konstruktiv einfacher zu gestalten. Verfahrensseitig soll die betreffende Anbindung gegenüber den herkömmlichen Herstellungsverfahren einfacher und kostengünstiger hergestellt werden können.

Die technische Aufgabe wird konstruktiv durch die kennzeichnenden Merkmale des Anspruches 1 gelöst. Ausgestaltungsmöglichkeiten hierzu ergeben sich aus dem Unteranspruch 2.

Die verfahrensseitige Aufgabe wird durch die kennzeichnenden Merkmale des Anspruchs 3 gelöst, wobei zweckdienliche Ausgestaltungen in den Unteransprüchen 4 und 5 aufgezeigt werden.

Der neue zweigeteilte Stabilisator und das neue Verfahren zur Herstellung der Anbindung des äußeren Drehteiles an den betreffenden Stabilisatorteil beseitigt die genannten Nachteile des Standes der Technik.

So zeichnet sich die neue Anbindung durch eine hohe Tragfähigkeit aus, die zunächst durch die spielfrei hergestellte Verzahnung begründet ist. Diese Tragfähigkeit wird durch die umlaufende Schweißnaht weiter erhöht, weil auch die Schweißnaht im begrenzten Umfang eine tragende Funktion übernimmt. Dabei ist die Spielfreiheit der Verzahnung so gering ausgelegt, dass die Schweißnaht in keiner Funktionsphase die alleinige Drehmomentübertragung übernimmt. Dadurch können die Festigkeitsanforderungen an die Schweißnaht gering gehalten werden.

Die so ausgelegte umlaufende Schweißnaht hat den Vorteil, dass sie die Verzahnung so dicht verschließt, dass kein Druckmittel aus den inneren Arbeitsräumen nach außen gelangen kann. Durch diese Dichtungsfunktion werden die herkömmlichen Dichtelemente zwischen dem Verschlussdeckel des äußeren Drehteiles und dem betreffenden Stabilisatorteil überflüssig, was erhebliche Kosten spart. Des weiteren sichert diese Schweißnaht den Stabilisatorteil gegenüber dem Verschlussdeckel des äußeren Drehteiles gegen axiale Belastung. Damit kann auf die sonst notwendige radiale Verstiftung und ihrer schwierigen Herstellung verzichtet werden, was ebenfalls Kosten spart. Obendrein wird eine auf die Verstiftung zurückgehende Materialschwächung im Verschlussdeckel und im Stabilisatorteil vermieden, was sich positiv auf die Tragfähigkeit der Anbindung auswirkt.

Es ist von besonderem Vorteil, wenn die Schweißnaht in einem innenliegenden Ringraum ausgebildet wird. Das ist fertigungstechnisch günstig und macht die Schweißnaht unsichtbar, sodass sie kosmetisch nicht nachbearbeitet werden muss.

Unter Verwendung nichtschweißbarer oder nur bedingt schweißbarer Materialien ist es zur Vermeidung von Rissbildungen notwendig, eine gezielte Vorwärmung und eine definierte Abkühlung vorzunehmen. Dabei ist es vorteilhaft, mit Hilfe des Induktionsglühen vorzuwärmen, weil dann nur ein sehr begrenzter Bereich erwärmt wird, und anschließend unter Schutzgas zu schweißen, weil das ein einfaches und kostengünstiges Verfahren ist.

Die Erfindung soll anhand eines Ausführungsbeispieles näher erläutert werden.

Dazu zeigen:
- Fig. 1:: eine Schnittdarstellung eines Aktuators in der Ausführung einer drehbaren Schaltkupplung und
- Fig. 2:: die drehbare Schaltkupplung mit einer vergrößerten Ansicht des Stabilisatorteiles.

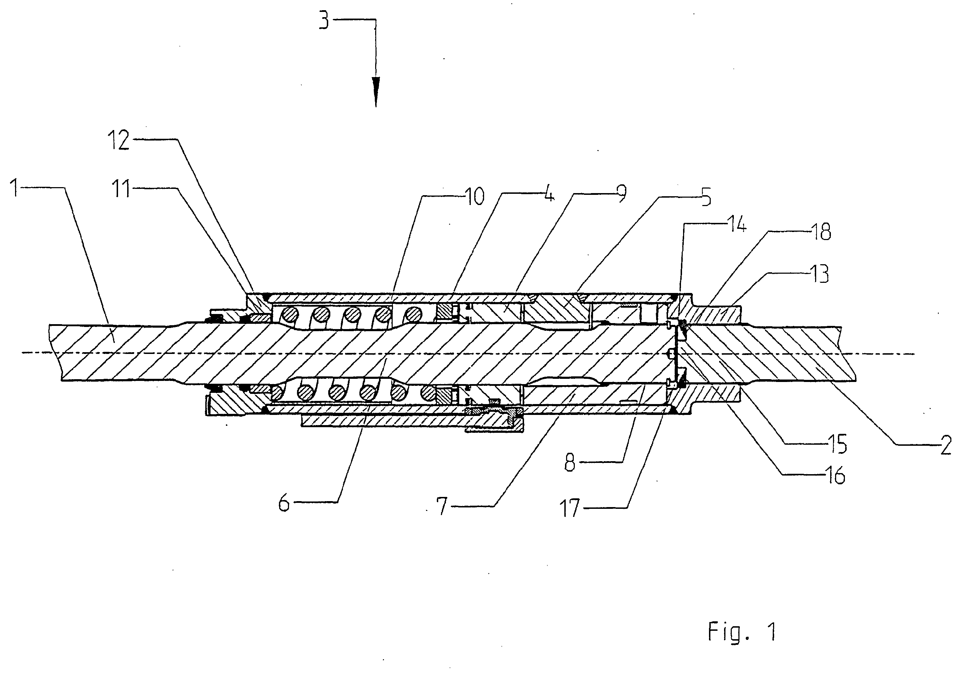

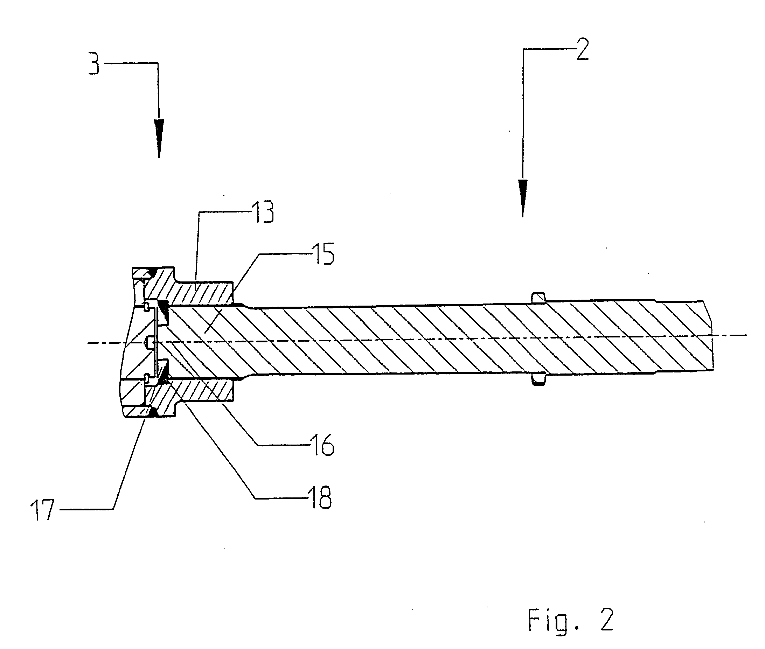

Gemäß der beiden Fig. 1 und 2 besteht der geteilte Stabilisator aus einem ersten Stabilisatorteil 1 und einem zweiten Stabilisatorteil 2, die beide über eine Schaltkupplung 3 miteinander verbunden sind. Die Schaltkupplung 3 besteht aus einem äußeren Drehteil 4 in Form eines zylindrischen Gehäuses mit einem drehfesten und nach innen gerichteten Drehflügel 5 und einem inneren Drehteil 6 mit einem nach außen gerichteten Drehflügel 7. Dabei ist der innere Drehteil 6 und sein nach außen gerichteter Drehflügel 7 über eine Verzahnung 8 drehfest miteinander verbunden. Beide Drehflügel 5 und 7 liegen auf einer gemeinsamen radialen Ebene und bilden zwischen sich zwei gegenüberliegende Kupplungsräume aus. Auf dem inneren Drehteil 6 ist eine Kupplungshülse 9 mit zwei konischen Kupplungsklauen axial verschiebbar geführt, wobei die Kupplungsklauen in die beiden freien Kupplungsräume der Drehflügel 5 und 7 eingreifen. Dabei wird die Kupplungshülse 9 einerseits von der Kraft einer Druckfeder 10 und beiderseits und wechselweise durch den hydraulischen Druck einer nicht dargestellten Hydraulikanlage beaufschlagt. Somit bildet sich unter der Kraft der Druckfeder 10 und des gleichgerichteten Hydraulikdruckes ein Formschluss zwischen den Drehflügeln 5 und 7 und den beiden Kupplungsklauen der Kupplungshülse 9 und damit eine drehfeste Verbindung zwischen dem äußeren Drehteil 4 und dem inneren Drehteil 6. Dieser Formschluss und damit die drehfeste Verbindung wird bei einer entgegengesetzt gerichteten Druckbeaufschlagung der Kupplungshülse 9 unterbrochen, sodass die Drehflügel 5 und 7 begrenzt zueinander drehbar sind.

Der innere Drehteil 6 ist mit dem ersten Stabilisatorteil 1 einstückig ausgebildet und mit seinem freien Ende durch das Gehäuse des äußeren Drehteiles 4 bis in Höhe des zweiten Stabilisatorteiles 2 hindurchgeführt und dort gelagert. Außerdem besitzt der innere Drehteil 6 eine weitere Lagerstelle 11 in einem Lagerdeckel 12, der sich auf der Seite des ersten Stabilisatorteiles 1 befindet und der zusätzlich den diesseitigen hydraulischen Druckraum verschließt und nach außen abdichtet.

Der äußere Drehteil 4 ist auf der Seite des zweiten Stabilisatorteils 2 mit einem Verschlussdeckel 13 ausgestattet, der mit dem Gehäuse des äußeren Drehteiles 4 vorzugsweise verschweißt ist und der den diesseitigen hydraulischen Druckraum verschließt. Dieser Verschlussdeckel 13 besitzt eine Durchgangsbohrung 14 mit einer Innenverzahnung. Andererseits ist das Ende des zweiten Stabilisatorteiles 2 als ein Schaft 15 ausgebildet, der eine Außenverzahnung trägt, wobei die Durchgangsbohrung 14 und der Schaft 15 so aufeinander abgestimmt sind, dass eine nahezu spielfreie Verzahnung besteht. Diese Verzahnung besitzt außerdem eine solche Festigkeit und Tragfähigkeit, die allein zur Übertragung der sich einstellenden Drehmomente geeignet ist. Der Schaft 15 des zweiten Stabilisatorteiles 2 ist in seinem Durchmesser abgesetzt und bildet so einen Zapfen 16 aus, der sich axial am inneren Drehteil 6 abstützt und der im Zusammenwirken mit der Durchgangsbohrung 14 des Verschlussdeckels 13 einen Ringraum 17 ausbildet. In besonderer Weise befindet sich in diesem Ringraum 17 eine umlaufende Schweißnaht 18, die die Verzahnung zwischen dem Verschlussdeckel 13 und dem Schaft 15 miteinander verschweißt. Diese Schweißnaht 18 ist so ausgebildet und so ausgeführt, dass sie eine Dichtungsfunktion nach außen für den diesseitigen hydraulischen Druckraum und gleichermaßen eine axiale Sicherungsfunktion des zweiten Stabilisatorteiles 2 gegenüber des äußeren Drehteiles 4 übernimmt.

Zur Erreichung der erforderliche Federrate sind die Stabilisatorteile 1, 2 aus einem Federstahl 55 Cr 3 und der Verschlussdeckel 13 aus einem Einsatzstahl gefertigt, wobei als Einsatzstahl vorzugsweise 16 Mn Cr 5 verwendet wird. Dabei gilt der Federstahl als nicht und der Einsatzstahl als nur bedingt schweißbar. Die Schweißnaht 18 mit ihren beiden unterschiedlichen Werkstoffen wird daher über eine Zeitdauer von etwa 15 sec. auf eine Temperatur von 350°C vorgewärmt, wobei die Vorwärmung durch ein örtlich auf den Nahtbereich begrenztes Induktionsglühen erfolgt. Dadurch stellt sich bei allen beteiligten Werkstoffen ein zum Grundwerkstoff des Stabilisatorteils 2 weitgehend identisches Gefüge ein. Anschließend werden beide Teile unter Schutzgas verschweißt, wobei ein Vorschub des Schweißdrahtes von 11 cm/min und eine Schweißgeschwindigkeit von 9 mm/sec. gewählt wird. Danach wird über eine Zeitdauer von mindestens 109 sec. langsam abgekühlt und zwar solange, bis sich der Martensitgehalt im Gefüge auf etwa 30 % verringert hat.

### Bezugszeichenliste

- 1: Erster Stabilisatorteil
- 2: Zweiter Stabilisatorteil
- 3: Schaltkupplung
- 4: Äußerer Drehteil
- 5: Drehflügel
- 6: Innerer Drehteil
- 7: Drehflügel
- 8: Verzahnung
- 9: Kupplungshülse
- 10: Druckfeder
- 11: Lagerstelle
- 12: Lagerdeckel
- 13: Verschlussdeckel
- 14: Durchgangsbohrung
- 15: Schaft
- 16: Zapfen
- 17: Ringraum
- 18: Umlaufende Schweißnaht

## Patentansprüche

1. Geteilter Stabilisator, bestehend aus einem ersten Stabilisatorteil (1) und einem zweiten Stabilisatorteil (2), die beide durch einen Aktuator miteinander verbunden sind, wobei der Aktuator aus einem inneren Drehteil (6) mit mindestens einem nach außen gerichteten Drehflügeln (7) und aus einem äußeren Drehteil (4) mit gleich vielen nach innen gerichteten Drehflügel (5) besteht, die zwischen sich Freiräume für eine Kupplungshülse (9) oder hydraulische Druckräume ausbilden, und der innere Drehteil (6) des Aktuators (3) mit dem ersten Stabilisatorteil (1) und der äußere Drehteil (4) mit dem zweiten Stabilisatorteil (2) drehfest verbunden sind und die drehfeste Verbindung zwischen dem äußeren Drehteil (4) und dem zweiten Stabilisatorteil (2) über eine Verzahnung zwischen dem äußeren Drehteil (4) und dem zweiten Stabilisatorteil (2) erfolgt,
**dadurch gekennzeichnet, dass** die Verzahnung zwischen dem äußeren Drehteil (4) und dem zweiten Stabilisatorteil (2) spielfrei ausgebildet ist und durch eine umlaufende Schweißnaht (18) verschweißt ist, wobei die Schweißnaht (18) so ausgeführt ist, dass sie die innenliegenden Arbeitsräume nach außen druckdicht verschließt und den zweiten Stabilisatorteil (2) gegenüber dem äußeren Drehteil (4) axial sichert.

2. Geteilter Stabilisator nach Anspruch 1,
**dadurch gekennzeichnet, dass** der äußere Drehteil (4) einen Verschlussdeckel (13) mit einer Durchgangsbohrung (14) besitzt, in der die Innenverzahnung eingebracht ist, und der zweite Stabilisatorteil (2) mit einem stirnseitigen Zapfen (16) ausgebildet ist, der die Außenverzahnung trägt, und die Durchgangsbohrung (14) und der Zapfen (16) einen Ringraum (17) ausbilden, der im Bereich der Verzahnung die Schweißnaht (18) aufnimmt, wobei die Schweißnaht (18) als eine Kehlnaht ausgebildet ist.

3. Verfahren zur Herstellung einer verzahnten Anbindung des äußeren Drehteiles eines Aktuators mit dem zweiten Stabilisatorteil (2), wobei der Drehteil (4) aus einem Einsatzstahl und der Stabilisatorteil (2) aus einem Federstahl besteht,
**dadurch gekennzeichnet, dass** die Innenverzahnung des äußeren Drehteiles (4) und die Außenverzahnung des zweiten Stabilisatorteiles (2) spielfrei zueinander geräumt werden und die Verzahnung zwischen, dem äußeren Drehteil (4) und dem zweiten Stabilisatorteil (2) durch eine umlaufende druckdichte Schweißnaht (18) verschweißt werden.

4. Verfahren nach Anspruch 3,
**dadurch gekennzeichnet, dass** der äußere Drehteil (4) und der zweite Stabilisatorteil (2) im Nahtbereich über eine Zeitdauer von 15 sec. auf eine Temperatur von 350 °C vorgewärmt und nach dem Schweißen bis auf einen Martensitgehalt im Gefüge von 30 % abgekühlt wird.

5. Verfahren nach Anspruch 4,
**dadurch gekennzeichnet, dass** die Vorwärmung durch Induktionsglühen und das Schweißen unter Schutzgas erfolgt, wobei ein Vorschub des Schweißdrahtes von 11 cm/min und eine Schweißgeschwindigkeit von 9 mm/sec. gewählt wird.

## Claims

1. Split stabiliser, consisting of a first stabiliser part (1) and a second stabiliser part (2), the two parts being connected together by an actuator, wherein the actuator consists of an inner rotating part (6) with at least one outward directed rotating vane (7) and of an outer rotating part (4) with the same number of inward directed rotating vanes (5), these vanes forming between them free chambers for a clutch bush (9) or hydraulic pressure chambers, and the inner rotating part (6) of the actuator (3) is connected to the first stabiliser part (1) and the outer rotating part (4) to the second stabiliser part (2) in a rotationally rigid manner, and the rotationally rigid connection between the outer rotating part (4) and the second stabiliser part (2) is effected via a tooth system between the outer rotating part (4) and the second stabiliser part (2), **characterised in that** the tooth system between the outer rotating part (4) and the second stabiliser part (2) is free from play and welded by an all-round weld seam (18), wherein the weld seam (18) is formed such that it shuts off the inner working chambers towards the outside in a pressure-tight manner and axially secures the second stabiliser part (2) with respect to the outer rotating part (4).

2. Split stabiliser according to Claim 1,
**characterised in that** the outer rotating part (4) has a shut-off cover (13) with a through-bore (14) into which the internal tooth system is introduced, and the second stabiliser part (2) is formed at the end face with a journal (16) which bears the external tooth system, and the through-bore (14) and the journal (16) form an annular chamber (17) which comprises the weld seam (18) in the region of the tooth system, wherein the weld seam (18) is formed as a fillet weld.

3. Method for producing a toothed connection between the outer rotating part of an actuator and the second stabiliser part (2), wherein the rotating part (4) consists of a case hardening steel and the stabiliser part (2) consists of a spring steel,
**characterised in that** the internal tooth system of the outer rotating part (4) and the external tooth system of the second stabiliser part (2) are broached so as to be free from play relative to one another, and the tooth system between the outer rotating part (4) and the second stabiliser part (2) is welded by an all-round, pressure-tight weld seam (18).

4. Method according to Claim 3,
**characterised in that** the outer rotating part (4) and the second stabiliser part (2) are preheated in the region of the weld seam for a duration of 15 seconds to a temperature of 350°C and cooled after welding to a martensite content in the structure of 30 %.

5. Method according to Claim 4,
**characterised in that** the preheating takes place by means of induction annealing and the welding under protective gas, wherein a welding wire feed of 11 cm/min. and a welding speed of 9 mm/sec. are selected.

## Revendications

1. Barre stabilisatrice divisée, composée d'un premier élément de barre stabilisatrice (1) et d'un second élément de barre stabilisatrice (2) reliés l'un à l'autre par l'intermédiaire d'un actionneur, l'actionneur étant composé d'un élément tournant intérieur (6) comprenant au moins une palette de rotation (7) tournée vers l'extérieur, et d'un élément tournant extérieur (4) comprenant le même nombre de palettes de rotation (5) tournées vers l'intérieur, les palettes formant entre elles des espaces libres pour un manchon d'accouplement (9), ou des chambres de pression hydraulique, et où l'élément tournant intérieur (6) de l'actionneur (3) est relié au premier élément de barre stabilisatrice (1) de façon solidaire en rotation, et l'élément tournant extérieur (4) est relié au second élément de barre stabilisatrice (2) de façon solidaire en rotation, la liaison solidaire en rotation entre l'élément tournant extérieur (4) et le second élément de barre stabilisatrice (2) étant réalisée par l'intermédiaire d'une denture entre l'élément tournant extérieur (4) et le second élément de barre stabilisatrice (2),
**caractérisée en ce que** la denture entre l'élément tournant extérieur (4) et le second élément de barre stabilisatrice (2) est réalisée sans jeu et est arrêtée au moyen d'un cordon de soudure périphérique (18), le cordon de soudure (18) étant exécuté de manière telle qu'il obture les chambres de travail intérieures de façon étanche à la pression face à l'extérieur, et qu'il arrête axialement le second élément de barre stabilisatrice (2) par rapport à l'élément tournant extérieur (4).

2. Barre stabilisatrice divisée selon la revendication 1, **caractérisée en ce que** l'élément de rotation extérieur (4) comporte une cloche terminale (13) ayant un alésage débouchant (14) dans lequel est aménagée la denture intérieure, et que le second élément de barre stabilisatrice (2) est conformé avec un téton frontal (16) qui porte la denture extérieure, et que l'alésage débouchant (14) et le téton (16) forment une chambre annulaire (17) qui accueille le cordon de soudure (18) au niveau de la denture, le cordon de soudure (18) étant réalisé sous forme d'une soudure d'angle.

3. Procédé de fabrication d'une liaison par engrènement entre l'élément tournant extérieur d'un actionneur et le second élément de barre stabilisatrice (2), l'élément tournant (4) étant fait en un acier cémenté, et l'élément de barre stabilisatrice (2) étant fait en un acier à ressort, **caractérisé en ce que** la denture intérieure de l'élément tournant extérieur (4) et la denture extérieure du second élément de barre stabilisatrice (2) sont faites sans jeu, par brochage, et que la denture est fixée par un cordon de soudure périphérique (18), étanche à la pression, entre l'élément tournant extérieur (4) et le second élément de barre stabilisatrice (2).

4. Procédé selon la revendication 3, **caractérisé en ce que** l'élément tournant extérieur (4) et le second élément de barre stabilisatrice (2) sont soumis, dans la zone du cordon de soudure, à un préchauffage d'une durée de 15 sec. pour atteindre une température de 350°C, et qu'ils sont refroidis, après le soudage, jusqu'à une teneur en martensite dans la structure, qui est de 30%.

5. Procédé selon la revendication 4, **caractérisé en ce que** le préchauffage est effectué par recuit par induction, et le soudage est effectué sous gaz inerte, en choisissant une avance du fil de métal d'apport de 11 cm/min et une vitesse de soudage de 9 mm/sec.
